# EUROPEAN PATENT APPLICATION

(11) **EP 1 126 727 A1**
(43) Date of publication of application: **22.08.2001**
(21) Application number: 00301202.8
(22) Date of filing: 16.02.2000
(51) Int. Cl.: H04N 13/00, H04N 13/04, G06F 3/00

(54) **Method and apparatus for generating stereoscopic images**

(71) Applicant: ADI Corporation, Taiping City, Taichung Hsien, Taiwan R.O.C. (TW)
(72) Inventor: Pao-San, Ku, Hsintien City, Taichung Hsien (TW)
(74) Representative: Mounteney, Simon James

(57) **Abstract**

An apparatus is adapted for generating a stereoscopic image from an input image frame within a frame time that includes consecutive first and second field times, and includes a display unit (30), an image input unit (2) and a display controller unit (33, 33') connected to the display unit (30). The image input unit (2) provides the input image frame to the display unit (30). The display controller unit (33, 33') controls the display unit (30) to show the input image frame at one of a default starting position and a displaced starting position during the first field time, and controls the display unit (30) to show the input image frame at the other one of the default starting position and the displaced starting position during the second field time. The image frames (312, 311) shown during the first and second field times form a parallax therebetween to generate the stereoscopic image (313). A method for generating the stereoscopic image is also disclosed.

## Description

The invention relates to the generation of images, more particularly to a method and an apparatus for generating a stereoscopic image.

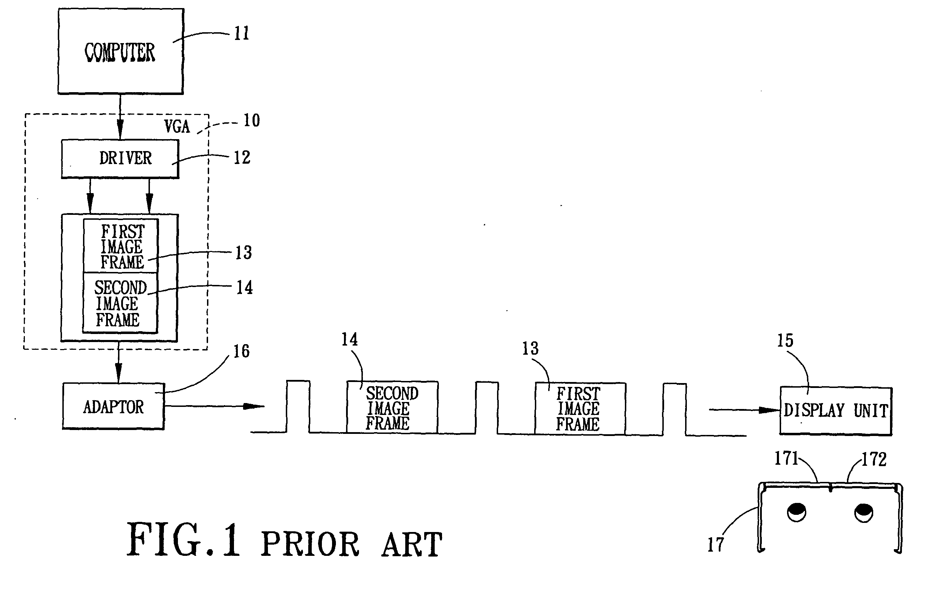

Figure 1 illustrates a conventional apparatus for generating a stereoscopic image from an input image frame. The conventional apparatus includes an image input device, such as a computer 11, a driver 12 disposed on a VGA card 10, an adaptor 16, a display unit 15 and a pair of liquid crystal shutter glasses 17. The computer 11 is connected to the driver 12 and provides the input image frame thereto. The driver 12 divides the input image frame into a first image frame 13, and a second image frame 14 having a displacement relative to the first image frame 13 and interlacing with the first image frame 13 via a software program. The adaptor 16 is connected to the VGA card 10 for receiving the first and second image frames, and is operable so as to output the first and second image frames, respectively, to the display unit 15 during consecutive field times. Therefore, by means of the pair of the liquid crystal shutter glasses 17 in a manner known in the art, the first and second image frames 13, 14 shown on the display unit 15 can form a parallax therebetween to generate the stereoscopic image.

The following are some of the drawbacks of the conventional apparatus:
1. The driver must be compatible with the VGA card, thereby resulting in greater complexity.
2. Because the first and second image frames are interlaced, the resolution of the stereoscopic image is reduced by half
3. The adaptor 16 is needed to provide the first and second image frames 13, 14 to the display unit 15, thereby resulting in higher costs.

Therefore, the object of the present invention is to provide a method and an apparatus for generating a stereoscopic image which can overcome the abovementioned drawbacks associated with the prior art.

According to one aspect of the present invention, a method is adapted for generating a stereoscopic image from an input image frame within a frame time that includes consecutive first and second field times, and comprises the steps of:
(a) providing the input image frame to a display unit;
(b) during the first field time, controlling the display unit to show the input image frame at one of a default starting position and a displaced starting position relative to the default starting position; and
(c) during the second field time, controlling the display unit to show the input image frame at the other one of the default starting position and the displaced starting position.

As such, the image frames shown during the first and second field times can form a parallax therebetween to generate the stereoscopic image.

According to another aspect of the present invention, an apparatus is adapted for generating a stereoscopic image from an input image frame within a frame time that includes consecutive first and second field times, and includes a display unit, image input means and display controller means.

The image input means, which is connected to the display unit, provides the input image frame to the display unit.

The display controller means, which is connected to the display unit, controls the display unit to show the input image frame at one of a default starting position and a displaced starting position during the first field time, and controls the display unit to show the input image frame at the other one of the default starting position and the displaced starting position during the second field time.

Thus, the image frames shown during the first and second field times can form a parallax therebetween to generate the stereoscopic image.

Other features and advantages of the present invention will become apparent in the following detailed description of the preferred embodiments with reference to the accompanying drawings, of which:
Figure 1 is a schematic circuit block diagram illustrating a conventional apparatus for generating a stereoscopic image;
Figure 2 is a schematic circuit block diagram illustrating the first preferred embodiment of an apparatus for generating a stereoscopic image according to this invention;
Figure 3 is a schematic circuit block diagram illustrating the second preferred embodiment of an apparatus for generating a stereoscopic image according to this invention; and
Figure 4 is a schematic view illustrating how the stereoscopic image is generated according to this invention.

Before the present invention is described in greater detail, it should be noted that like elements are denoted by the same reference numerals throughout the disclosure.

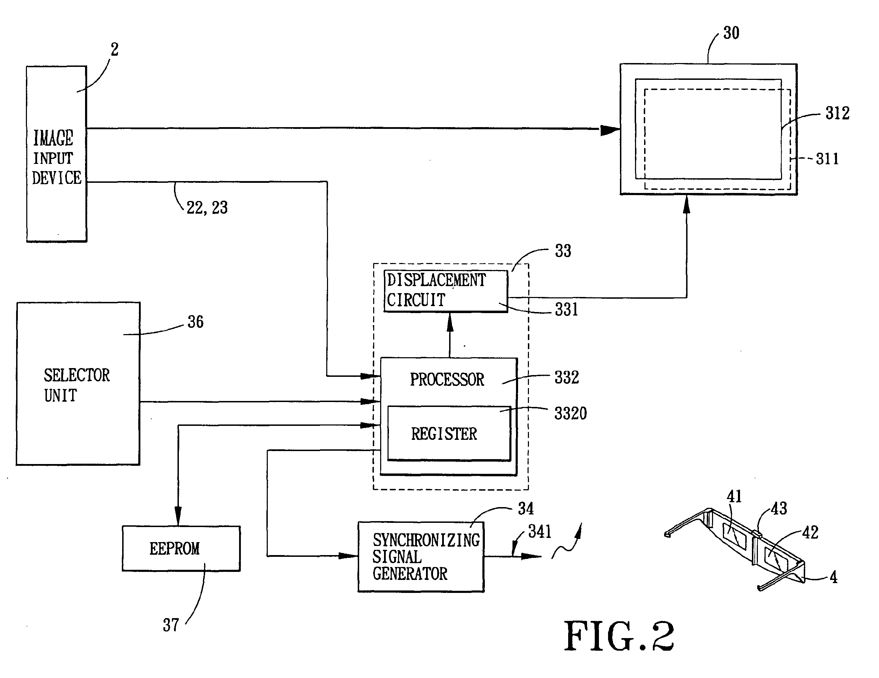

Referring to Figure 2, according to the first preferred embodiment, an apparatus is shown to be adapted for generating a stereoscopic image from an input image frame within a frame time that includes consecutive first and second times. The apparatus includes a display unit 30, an image input device 2, a display controller 33, a selector unit 36 and a data storage unit.

The display unit 30 includes a color cathode ray tube display.

The image input device 2 is connected to the display unit 30 and the display controller 33, and is operable so as to provide the input image frame that includes analog red, green and blue image signals. The image input device 2 further provides horizontal and vertical synchronizing signals 22, 23 to enable the display controller 33 to control the starting position of the input image frame on the display unit 30 and to divide the frame time into the first and second field times.

The display controller 33 is connected to the display unit 30. The display controller 33 is operable in a normal mode, where the display controller 33 controls the display unit 30 to show the input frame at a default starting position during the first and second field times. The display controller 33 is further operable in a stereoscopic mode, where the display controller 33 controls the display unit 30 to show the input image frame at the default starting position to form a first image frame 312 during the first field time, and controls the display unit 30 to show the input image frame at a displaced starting position relative to the default starting position to form a second image frame 311 during the second field time.

The selector unit 36 is connected to the display controller 33, and is operable so as to control operation of the display controller 33 in a selected one of the normal and stereoscopic modes. The selector unit 36 is also operable so as to enable the display controller 33 to adjust the display unit 30 in selected conditions, such as horizontal/vertical OSD position, brightness, etc.

The data storage unit, such as an EEPROM 37, is connected to the display controller 33, and stores default starting position variables and displaced starting position variables therein. The display controller 33 controls the display unit 30 to show the input image frame at the default starting position in accordance with the default starting position variables, and controls the display unit 30 to show the input image frame at the displaced starting position in accordance with the displaced starting position variables when the display controller 33 is operated in the stereoscopic mode.

In this embodiment, the display controller 33 includes a processor 332 having a register 3320 to store the default starting position variables during the first field time, and to store the displaced starting position variables during the second field time when the display controller 33 is operated in the stereoscopic mode, and a displacement circuit 331 interconnecting the processor 332 and the display unit 30 for processing the default starting position variables and the displaced starting position variables so as to control the display unit 30 to show the first and second image frames 312, 311 during the first and second field times when the display controller 33 is operated in the stereoscopic mode.

The apparatus further includes a synchronizing signal generator 34 connected to the display controller 33 for generating an infrared signal corresponding to the vertical synchronizing signal.

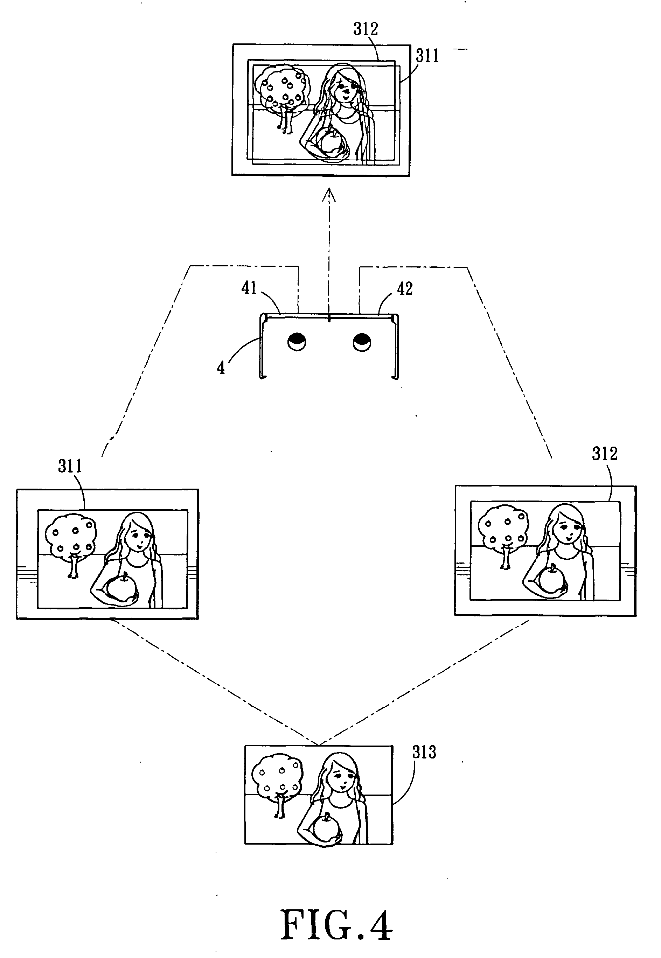

The first and second image frames 312, 311 shown during the first and second field times when the display controller 33 is operated in the stereoscopic mode form a parallax therebetween to generate the stereoscopic image 313, as shown in Figure 4, that is visible via a pair of liquid crystal shutter glasses 4 which includes a receiver 43 to receive the infrared signal from the signal generator 34 and two window portions 41, 42. The window portions 41, 42 are alternately shut to permit viewing of the stereoscopic image 313. Since the specific configuration of the pair of liquid crystal shutter glasses 4 is known in the art and is not critical to this invention, a detailed description of the same is omitted herein for the sake of brevity.

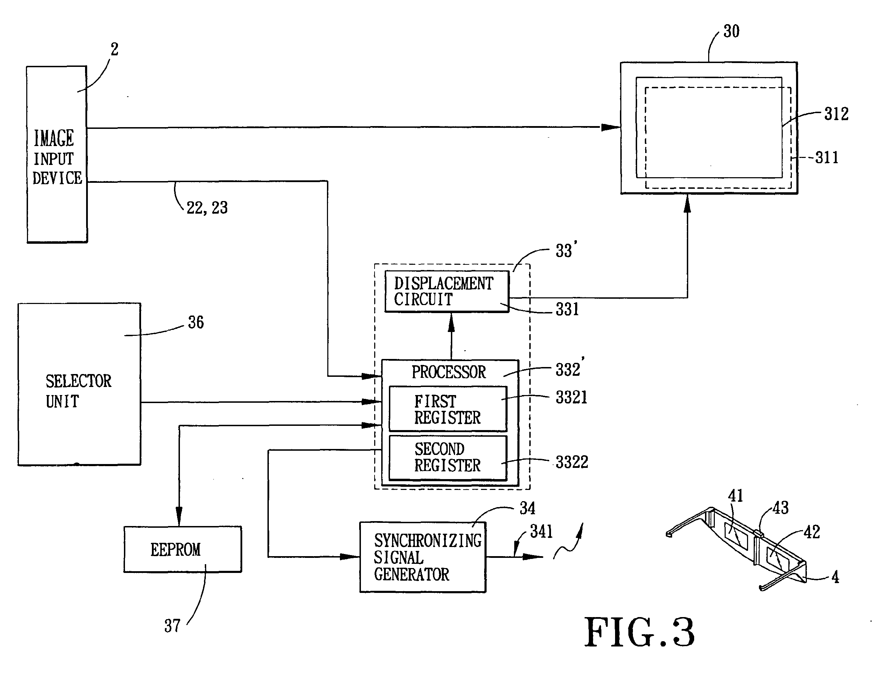

Figure 3 shows the second preferred embodiment of an apparatus according to this invention, which is a modification of the first preferred embodiment. Unlike the previous embodiment, the display controller 33' includes a processor 332' having a first register 3321 to store the default starting position variables, and a second register 3322 to store the displaced starting position variables when the display controller 33' is operated in the stereoscopic mode, thereby obviating the need to replace the contents of the first register 3321 when showing the first and second image frames.

Therefore, the apparatus of this invention is not needed to provide the abovementioned driver and adaptor, thereby resulting in less complexity and lower costs. The object of the invention is thus met.

## Claims

1. A method for generating a stereoscopic image from an input image frame within a frame time that includes consecutive first and second field times, characterized by the steps of:
(a) providing the input image frame to a display unit (30);
(b) during the first field time, controlling the display unit (30) to show the input image frame at one of a default starting position and a displaced starting position relative to the default starting position; and
(c) during the second field time, controlling the display unit (30) to show the input image frame at the other one of the default starting position and the displaced starting position;
whereby, the image frames (312, 311) shown during the first and second field times form a parallax therebetween to generate the stereoscopic image (313).

2. An apparatus for generating a stereoscopic image from an input image frame within a frame time that includes consecutive first and second field times, including a display unit (30), image input means (2), connected to said display unit (30), for providing the input image frame thereto, characterized by
display controller means (33, 33'), connected to said display unit (30), for controlling said display unit (30) to show the input image frame at one of a default starting position and a displaced starting position during the first field time, and for controlling said display unit (30) to show the input image frame at the other one of the default starting position and the displaced starting position during the second field time;
whereby, the image frames (312, 311) shown during the first and second field times form a parallax therebetween to generate the stereoscopic image (313).

3. The apparatus of Claim 2, further characterized by storage means (37), connected to said display controller means (33, 33'), for storing default starting position variables and displaced starting position variables therein, said display controller means (33, 33') controlling said display unit (30) to show the input image frame at the default starting position in accordance with said default starting position variables, and controlling said display unit (30) to show the input image frame at the displaced starting position in accordance with said displaced starting position variables.

4. The apparatus of Claim 3, further characterized in that said display controller means (33) includes a processor (332) having a register (3320) to store said default starting position variables during the first field time, and to store said displaced starting position variables during the second field time.

5. The apparatus of Claim 3, further characterized in that said display controller means (33') includes a processor (332') having a first register (3321) to store said default starting position variables, and a second register (3322) to store said displaced starting position variables.

6. An apparatus for generating a stereoscopic image from an input image frame within a frame time that includes consecutive first and second field times, including a display unit (30), an image input device (2) connected to said display unit (30) and operable so as to provide the input image frame thereto, characterized by
a display controller (33, 33') connected to said display unit (30), said display controller (33, 33') being operable in a normal mode, where said display controller (33, 33') controls said display unit (30) to show the input image frame at a default starting position during the first and second field times;
said display controller (33, 33') being further operable in a stereoscopic mode, where said display controller (33, 33') controls said display unit (30) to show the input image frame at one of the default starting position and a displaced starting position relative to the default starting position during the first field time, and controls said display unit (30) to show the input image frame at the other one of the default starting position and the displaced starting position during the second field time;
whereby, the image frames (312, 311) shown during the first and second field times when said display controller (33, 33') is operated in the stereoscopic mode form a parallax therebetween to generate the stereoscopic image (313).

7. The apparatus of Claim 6, further characterized by a selector unit (36) connected to said display controller (33, 33') and operable so as to control operation of said display controller (33, 33') in a selected one of the normal and stereoscopic modes.

8. The apparatus of Claim 2 or 7, further characterized in that said display controller means (33, 33') is further connected to said image input means (2), said image input means (2) further providing horizontal and vertical synchronizing signals (22, 23) to said display controller means (33, 33') to enable said display controller means (33, 33 ') to control the starting position of the input image frame and to divide the frame time into the first and second field times.

9. The apparatus of Claim 7, further characterized by a data storage unit (37) connected to said display controller (33, 33') and storing default starting position variables and displaced starting position variables therein, said display controller (33, 33') controlling said display unit (30) to show the input image frame at the default starting position in accordance with said default starting position variables, and controlling said display unit to show the input image frame at the displaced starting position in accordance with said displaced starting position variables when said display controller is operated in the stereoscopic mode.

10. The apparatus of Claim 9, further characterized in that said display controller (33) includes a processor (332) having a register (3320) to store said default starting position variables during the first field time, and to store said displaced starting position variables during the second field time when said display controller (33) is operated in the stereoscopic mode.

11. The apparatus of Claim 9, further characterized in that said display controller (33') includes a processor (332') having a first register (3321) to store said default starting position variables, and a second register (3322) to store said displaced starting position variables when said display controller (33') is operated in the stereoscopic mode.

12. The apparatus of Claim 2 or 6, further characterized in that said display unit (30) includes a cathode ray tube display.

13. The apparatus of Claim 12, further characterized in that said cathode ray tube display is a color cathode ray tube display.
